# EUROPEAN PATENT SPECIFICATION

(11) **EP 1 565 040 B1**
(45) Date of publication and mention of the grant of the patent: **07.05.2008**
(21) Application number: 05002919.8
(22) Date of filing: 11.02.2005
(51) Int. Cl.: H05B 7/14

(54) **Nipple for arc furnace electrodes**
Nippel für Lichtbogenelektroden
Nipple destiné aux électrodes de four à arc

(30) Priority: 13.02.2004 FR 0450260
(43) Date of publication of application: 17.08.2005
(73) Proprietor: SGL Carbon AG, 65203 Wiesbaden (DE)
(72) Inventor: Sadzot, Maurice, 74480 Plateau d'Assy (FR)

(56) References cited:
- EP-A- 0 260 529

## Description

The invention relates to connecting pieces, commonly called nipples, for joining end to end an in a fix and rigid connection cylindrical electrodes made of carbon or graphite used in electric arc furnaces.

In these furnaces, carbon or graphite electrodes are employed to conduct electric current and to transmit it through an electric arc which is struck at the end of the electrode, to the material treated in the furnace The dimensions of modem electrodes may reach more than one meter in diameter and over three meters in length. They can carry electric currents of more than one hundred thousands amperes.

During the operation of the furnace, the electrodes are progressively consumed at their arc end and then it is necessary to feed continuously the electrodes into the furnace. To replace the electrodes which have been largely consumed without shutdown of the furnace, it is customary to machine at the ends of the electrodes axial screw-threaded sockets in such a way that a new electrode can be easily added end to end in a fix and rigid connection to the largely consumed electrode by using a connecting double screw-threaded piece known as nipple. The connection made in such a way is called electrode joint.

The nipple size is proportional to the electrode size in order to provide optimal mechanical strength to the system. The nipple composition is a carbonaceous material identical or similar to that of the electrode.

For graphite electrodes, threaded sockets and nipples are generally like a sawn-off cone whereas for carbon electrodes most often cylindrical ones or even male-female systems are used. The present invention can be applied with all these different systems.

Although this type of electrode joint has been used for many years now, it is still the source of many problems. For example, the electrode joint may unscrew and create loose or even ruptured electrodes when subjected to severe conditions of temperature, vibration and mechanical and thermal shock. The occurrence of loose electrode joints can result in high electrical resistance and increased electrode consumption. In many cases, complete loss of an electrode section into the furnace may occur due to ruptured electrodes generated by loosening of the electrode joint.
In order to permanently bond the electrode joint and thus to solve these problems, attempts have been made by introducing a cement which polymerizes and/or carbonizes between the nipple and both electrode sections during the heating-up of the electrodes in operation in the furnace.
One of the procedures most frequently employed involves introduction of solid carbonaceous cement at ambient temperature into openings provided in the nipple before assembly to the electrode sockets. The joint which is formed in that way between two portions of electrode is rapidly heated as it is introduced into the furnace, which causes softening and then flow of the cement from its reservoir into the void spaces between the nipple and socket threads. Upon further heating, the cement is coked or carbonized, solidly bonding the joint and providing a permanent bond between the electrode sections.
Different configurations of nipples of the reservoir type have been proposed. For example, in U.S. 2,828,162, a pitch filled reservoir is located at each end face of the nipple and channels or passageways are provided to distribute the liquid pitch upon heating to the threaded area around the nipple. The location of the pitch reservoirs is, however, disadvantageous because high amounts of pitch coke are being deposited in the clearance between the nipple end faces and the socket bottom causing rupture of the electrode joint upon rapid thermal expansion when approaching the molten bath. Furthermore, due to the long flow distance the pitch is hardly distributed over the spaces between the nipple and socket threads where it should act as cement.

U.S. 2,836,294 discloses a pitch cartridge adapted to be inserted inside a reservoir provided in the nipple. The cartridge includes an outer fibrous, thermally insulating jacket, which is consumable at a temperature well above the melting point of the pitch. The jacket defers the time at which the pitch melts and avoids a premature distribution of the liquid pitch before the electrode joint has been fully formed.
Nevertheless, the problem loosening of the electrode joint still prevails and is most evident when the electrode is subjected to severe conditions. The main reason for this can be seen in the uneven distribution of pitch throughout the clearances between the nipple and socket threads.

That problem of distribution was initially resolved by the use of new pitch-based compositions incorporating an additive agent intended to promote expansion of the cement upon heating and therefore to facilitate distribution thereof in the thread gaps as from 100° C. Thus FR 2 204 673 recommends the use of a cement of particulate pitch diluted in the bonding agent based on lignin sulphonate whose foaming properties after humidification and heating beyond 100° C, are known. Likewise EP-A-0 260 529 describes an electrode joint in which the cement is formed for the major part by pitch with the addition of a minor amount of a foaming agent selected from the group consisting of sulphur, 2,4-dinitroaniline or nitrated clarified oils. In the latter case the foaming agent affords the double advantage of promoting distribution of the cement between the screw threads, by considerably reducing the temperature at which softening of the pitch begins, and significantly increasing the rate of coking of the pitch as from 350° C.
However, because electrodes were successively subjected to new operational parameters providing increased oxidation resistance, those types of additives became no longer suitable. As a result, FR 2 692 748 describes the use of new 2-component cement with the two components being separately placed into different reservoirs inside the nipple.
From the various methods to modify the pitch based cement none took into account that the cement should not enter into the spaces between the nipple and the socket bottoms where its bonding action is negligible and it can result rather in the opposite effect by facilitating rupturing of the electrode joint. Furthermore, none of the prior approaches provided means for a homogeneous and widespread distribution of the cement throughout the clearances in the central part of the threaded surfaces of the electrode joint where its action is most efficient.

It is therefore an object of the present invention to design nipples providing an improved electrode joint. A more precise object of the present invention is to minimize the concentration of mechanical stresses on the nipple and socket threads by a more uniform cement distribution over the threaded areas.

This improvement is achieved according to this invention by employing a nipple with reservoirs containing one or several cement components and by providing grooves in the threaded surface of the nipple which ensure the flow of the cement towards these clearances spaces in the central part of the threaded surfaces of the nipple where their action is most efficient.
More precisely, the nipples according to this invention have at the reservoir outlets one or several grooves extending through the threads in following lines terminated short of the longitudinal center of the nipple at their inner ends and short of the end faces of the nipple at their outer end. Having at least one continuous thread being left at each groove end provides a sufficient barrier that, when the electrode joint is heated and the cement or cement components melt and flow out of the reservoirs through the grooves towards the clearance spaces between the threaded surfaces of the sockets and the nipple, they are prevented from flowing towards the end faces of the electrodes and the spaces between the nipple ends and the bottoms of sockets. According to the present invention at least one and preferably three continuous threads are left at the end of each slot.
For more uniform distribution of the cement, the aforementioned grooves are preferably cut at an angle of 0° to 60°, most preferably 40° to 50°, with regard to the longitudinal nipple axis.
The depth of the aforementioned grooves can by lower, higher or preferably equal to that of the thread roots.
According to the present invention a proportion between 40% to 95 %, more preferably 60% to 80% of these clearance spaces is filled by the cement which can there act in an optimal way and this result is due to a nipple design which facilitates the flow of cement from the reservoirs towards the clearance spaces while preventing in an efficient way the losses of cement towards the adjacent end faces of the electrodes and the spaces between the nipple and the bottom of the electrode sockets.
The reservoir diameter can range from a few millimeters to a few centimeters, typically between 10 and 30 millimeters.
In one embodiment of this invention, two or more reservoirs can disembogue in a single groove.

In another embodiment, two grooves can cross each other at a single reservoir outlet.
Yet in another embodiment, several grooves can form a connected groove system.

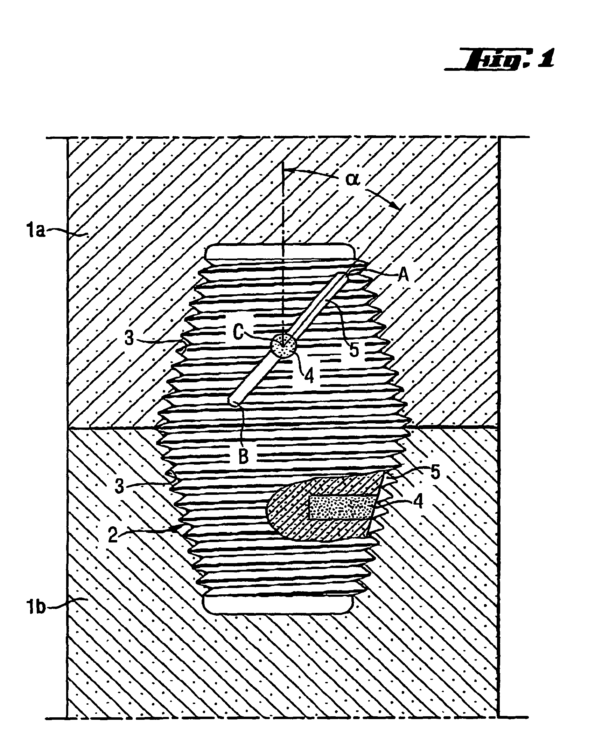

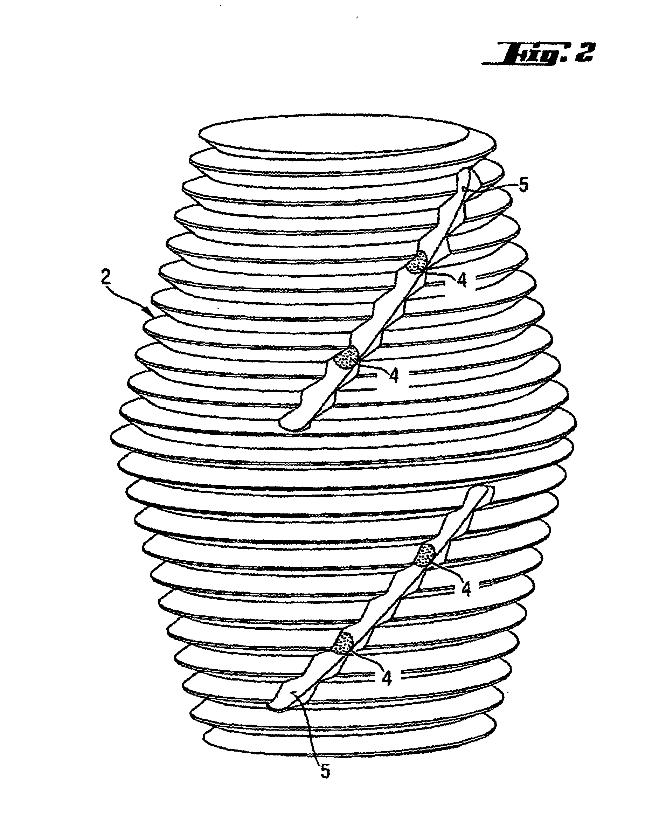

This invention will be better appreciated by a more detailed description, which is facilitated by Figure 1 depicting a vertical section through an electrode joint according to the present invention and by Figure 2 showing a nipple according to this invention.

Fig. 1 shows two electrodes 1a and 1b joined by a nipple 2. The electrodes 1a and 1b are provided at their ends with axial threaded sockets 3 in order to receive the threaded nipple 2. In this example, the nipple has the shape of a sawn-off cone.

Reservoirs 4 containing the cement or cement components are located between the longitudinal center of the nipple and each end face thereof. These reservoirs are bored holes extending transversally into the nipple. According to the number of reservoirs and their depth, the hole diameters are selected in a way that the total volume of cement or cement components is able to fill 40 to 95 % of the clearance spaces between the threaded surfaces of the sockets and the nipple.

In order to facilitate the flow of the cement or cement components from the reservoirs 4 towards the thread clearance spaces, linear grooves 5 were machined at an angle α into the nipple threads extending to the points A, B, and C, where α and the points A, B, and C are defined referring to the upper part of the nipple 2 depicted in Fig.1:
- α is the angle between the plane extending through the longitudinal axis of the nipple 2 and point C and the respective plane extending through the center line of groove 5.
- A is a point below one of the last threads before the upper end face of the nipple
- B is a point above of one of the last threads before the longitudinal center of the nipple
- C is the point where the plane extending through the longitudinal axis of the nipple 2 cuts the center of the groove

Figure 2 shows a nipple 2 according to this invention where two reservoirs 4 disembogue in a single groove 5.

As an example and without limiting the invention, a nipple designed to connect electrodes of 600 mm in diameter was manufactured with four reservoirs, two in the upper and two in the lower part of the nipple, each of 25 mm diameter extending to a depth of 120 mm bored at a distance of 100 mm from the end faces of the nipple. The total volume of cement contained in these reservoirs is sufficient to fill about 80 % of the clearance spaces between the nipple and the threaded surfaces of the sockets.
In a nipple of the type described for joining electrodes of 600 mm diameter, the width of these grooves can range between 3 to 10 mm having a depth equal to that of the threads root, When the nipple is heated, the cement or cement components melt and flow out of the reservoirs through the grooves towards the clearance spaces of the threads, which are cut by and open into the grooves. In that way, the cement or cement components can reach 40 to 95 % of the clearance spaces of the threads.
In addition, the present invention provides a system which permit to avoid losses of cement or cement components towards the adjacent end faces of the connected electrodes where they might be harmful or towards the spaces between the nipple and the bottoms of the sockets. To reach this result, the grooves 5 are terminated short of the longitudinal center of the nipple at their inner ends (point B) and short of the end faces of the nipple at their outer ends (point A) in such a way that at each slot end one and preferably several continuous threads are left in order to create a dam which will prevent the escape of the cement or cement components towards the non-desired spaces.
Electrode joints based on nipples according to this invention showed decreased loosening during utilization in arc steel furnaces.

### Key to figures

- 1a: electrode
- 1b: electrode
- 2: nipple
- 3: threaded electrode socket
- 4: reservoir
- 5: groove

- A: point of groove
- B: point of groove
- C: point of groove
- α: angle

## Claims

1. Nipple (2) for joining end to end and in a fixed and rigid connection cylindrical electrodes (1a, 1b) made of carbon or graphite and having at their ends axial screw-threaded sockets (3), provided in each of its two threaded surfaces with bored holes used as reservoirs (4) for one or several cement components, **characterized by** having at the reservoir outlets one or several grooves (5), extending through the threads in following lines terminated short of the longitudinal center of the nipple (2) at their inner ends (B) and short of the end faces of the nipple (2) at their outer end (A), for the purpose of having at least one continuous thread being left at each groove (5) end.

2. Nipple (2) according to claim 1, **characterized in that** the linear grooves (5) are machined at an angle α between 0° to 60°, α being the angle between the plane extending through the longitudinal axis of the nipple (2) and the center (C) of the groove (5) and the respective plane extending through the groove (5) center line.

3. Nipple (2) according to one of the claims 1 to 2, **characterized in that** the groove (5) depth is equal with respect to the thread roots.

4. Nipple (2) according to one of the claims 1 to 3, **characterized in that** the holes bored in each of its two threaded surfaces and used as reservoirs (4) for one or several cement components are extending radially within the nipple (2) in following axis perpendicular to the longitudinal axis of the nipple (2) and the holes diameters are ranging between 10 and 30 millimeters.

5. Nipple (2) according to claim 1 to 4, **characterized in that** two or more reservoirs (4) disembogue in a single groove.

6. A nipple (2) according to claim 1 to 4, **characterized in that** two grooves (5) cross each other at a single reservoir (4) outlet.

7. Nipple (2) according to claim 1 to 4, **characterized in that** several grooves (5) form a connected groove system.

8. Nipple (2) according to claim 1 to 7, **characterized in that** the volume of cement or cement components placed into the bored hole reservoir (4) is sufficient to fill 40% to 95%, preferably 60% to 80%, of the clearance spaces between the threaded surfaces of the sockets (3) and the nipple (2).

9. Utilization of nipples (2) according to claims 1 to 8 to join cylindrical electrodes (1a, 1b) made of carbon or graphite for use in electric arc furnaces.

## Patentansprüche

1. Nippel (2) zur festen stirnseitigen Verbindung von zylindrischen Elektroden (1 a, 1 b) aus Kohlenstoff oder Graphit mit stirnseitig eingebrachten axialen Schraubgewinde-Schachteln (3), welcher auf seinen beiden Gewindeflächen jeweils mit Bohrungen ausgestattet ist, welche als Reservoir (4) für eine oder mehrere Zementkomponenten dienen, **dadurch gekennzeichnet, dass** sich an den Auslässen des Reservoirs eine oder mehrere Fugen (5) befinden, welche die Gewindegänge in der Art durchschneiden, dass sich deren inneres Ende (B) kurz vor der längsseitigen Mitte des Nippels (2) und deren äußeres Ende (A) kurz vor der Stirnfläche des Nippels (2) befindet, so dass wenigstens ein vollständiger Gewindegang an jeder Fuge (5) angrenzt.

2. Nippel (2) gemäß Anspruch 1, **dadurch gekennzeichnet, dass** die linearen Fugen (5) mit einem Winkel α zwischen 0° bis 60° eingefräst werden, wobei α den Winkel zwischen der durch die längsseitige Achse des Nippels (2) verlaufenden Ebene am Mittelpunkt der Fuge (5) sowie der entsprechenden auf der Mittellinie der Fuge (5) liegenden Ebene beschreibt.

3. Nippel (2) gemäß einem der Ansprüche 1 bis 2, **dadurch gekennzeichnet, dass** die Tiefe der Fugen (5) der Tiefe der Gewindegänge entspricht.

4. Nippel (2) gemäß einem der Ansprüche 1 bis 3, **dadurch gekennzeichnet, dass** die in seinen beiden Gewindeflächen jeweils befindlichen Bohrungen, welche als Reservoir (4) für eine oder mehrere Zementkomponenten dienen, im Nippel (2) radial, senkrecht zur Längsachse von Nippel (2), eingebracht werden und einen Durchmesser zwischen 10 mm bis 300 mm haben.

5. Nippel (2) gemäß Ansprüchen 1 bis 4, **dadurch gekennzeichnet, dass** zwei oder mehr Reservoire (4) in eine Fuge (5) münden.

6. Nippel (2) gemäß Ansprüchen 1 bis 4, **dadurch gekennzeichnet, dass** sich zwei Fugen (5) an einem Auslass eines Reservoirs (4) kreuzen.

7. Nippel (2) gemäß Ansprüchen 1 bis 4, **dadurch gekennzeichnet, dass** mehrere Fugen (5) zu einem Fugennetzwerk verbunden sind.

8. Nippel (2) gemäß Ansprüchen 1 bis 7, **dadurch gekennzeichnet, dass** das in ein Reservoir (4) gefüllte Volumen an Zement oder Zementkomponenten ausreicht, um 40% bis 95%, bevorzugt 60% bis 80%, des Spalts zwischen den Gewindeflächen der Schachteln (3) und des Nippels (2) auszufüllen.

9. Verwendung von Nippeln (2) gemäß Ansprüchen 1 bis 8 zur Verbindung von zylindrischen Elektroden (1 a, 1 b) aus Kohlenstoff oder Graphit für den Einsatz im Lichtbogenofen.

## Revendications

1. Nipple (2) destiné à relier bout à bout, dans une connexion fixe et rigide, des électrodes cylindriques (1a, 1b) réalisées en carbone ou en graphite et comportant des cavités taraudées (3) à leurs extrémités axiales, le nipple étant muni, dans chacune de ses deux surfaces filetées, de trous de perçage utilisés comme réservoirs (4) pour un ou plusieurs composants de ciment,
**caractérisé en ce qu'**
il comporte, à l'endroit des sorties de réservoirs, une ou plusieurs rainures (5) s'étendant en travers des filets suivant des lignes dont les extrémités intérieures (B) se terminent avant le centre longitudinal du nipple (2), et leurs extrémités extérieures (A) et avant les faces d'extrémité du nipple (2), dans le but de laisser au moins un filet continu à chaque extrémité des rainures (5).

2. Niple (2) selon la revendication 1,
**caractérisé en ce que**
les rainures linéaires (5) sont usinées sous un angle α compris entre 0° et 60°, α étant l'angle compris entre le plan passant par l'axe longitudinal du nipple (2) et le centre (C) de la rainure (5), et le plan respectif passant par l'axe de la rainure (5).

3. Nipple (2) selon l'une des revendications 1 et 2,
**caractérisé en ce que**
la profondeur d'une rainure (5) est égale à la profondeur du fond des filets.

4. Nipple (2) selon l'une des revendications 1 à 3,
**caractérisé en ce que**
les trous percés dans chacune de ses deux surfaces filetées et utilisés comme réservoir (4) pour un ou plusieurs composants de ciment, s'étendent radicalement à l'intérieur du nipple (2) suivant un axe perpendiculaire à l'axe longitudinal du nipple (2), et les diamètres des trous se situent entre 10 et 30 millimètres.

5. Niple (2) selon l'une des revendications 1 à 4,
**caractérisé en ce que**
deux ou plusieurs réservoirs (4) débouchent dans une seule rainure.

6. Nipple (2) selon l'une des revendications 1 à 4,
**caractérisé en ce que**
deux rainures (5) se croisent l'une l'autre à l'endroit d'une seule sortie de réservoir (4).

7. Nipple (2) selon l'une des revendications 1 à 4,
**caractérisé en ce que**
plusieurs rainures (5) forment un système de rainures connectées.

8. Nipple (2) selon l'une des revendications 1 à 7,
**caractérisé en ce que**
le volume de ciment ou de composants de ciment placé dans le réservoir de trou de perçage (4) est suffisant pour remplir 40 % à 95 %, et de préférence 60 % à 80 %, des espaces de jeu entre les surfaces taraudées des cavités (3) et le nipple (2).

9. Utilisation de nipples (2) selon les revendications 1 à 8, pour relier des électrodes cylindriques (1a, 1b) réalisées en carbone ou en graphite à utiliser dans des fours à arc électrique.
